(19) Europäisches Patentamt

European Patent Office

Office européen des brevets

(11) **EP 1 205 293 B1**

(12) **EUROPÄISCHE PATENTSCHRIFT**

(45) Veröffentlichungstag und Bekanntmachung des Hinweises auf die Patenterteilung:
**12.07.2006   Patentblatt 2006/28**

(21) Anmeldenummer: **00124602.4**

(22) Anmeldetag: **10.11.2000**

(51) Int Cl.:
***B29C 47/92*** *(2006.01)*

(54) **Verfahren zur Dickenmessung an Mehrschichtfolien**

Methods of measuring the thickness of multi-layer films

Procédés pour mesurer l'épaisseur de films multicouches

(84) Benannte Vertragsstaaten:
**DE FR GB IT**

(43) Veröffentlichungstag der Anmeldung:
**15.05.2002   Patentblatt 2002/20**

(73) Patentinhaber: **Plast-Control Gerätebau GmbH**
**42899 Remscheid (DE)**

(72) Erfinder:
• **Müller, Frank**
**42111 Wuppertal (DE)**
• **Sappelt, Norbert**
**42369 Wuppertal (DE)**
• **Konermann, Stefan**
**42897 Remscheid (DE)**

(74) Vertreter: **TER MEER - STEINMEISTER & PARTNER GbR**
**Artur-Ladebeck-Strasse 51**
**33617 Bielefeld (DE)**

(56) Entgegenhaltungen:
**GB-A- 2 038 483          US-A- 3 635 620**
**US-A- 4 514 812          US-A- 5 676 893**

EP 1 205 293 B1

**Beschreibung**

Die Erfindung betrifft ein Verfahren zur kapazitiven Dickenmessung an Mehrschichtfolien, deren Schichten sich in ihren Dielektrizitätskonstanten bei einer ersten Temperatur stärker unterscheiden als bei einer zweiten Temperatur.

Es ist bekannt, daß die Dicken von Kunststoffolien kapazitiv gemessen werden können, weil die Kapazität eines Meßkondensators, dessen elektrisches Feld die Folie durchdringt, durch die Dicke der Folie und durch die Dielektrizitätskonstante des Folienmaterials beeinflußt wird. Die Ergebnisse solcher Dickenmessungen werden bei der Herstellung von Kunststoffolien, beispielsweise bei der Herstellung von Blasfolien, dazu benutzt, die Foliendicken in einem geschlossenen Regelkreis zu regeln, so daß hochwertige Folien mit einer definierten und über die gesamte Folienbreite im wesentlichen konstanten Dicke erhalten werden (EP-A-0 478 641).

Da es bei Blasfolienanlagen schwierig wäre, eine der Kondensatorplatten des Meßkondensators im Inneren der Folienblase anzuordnen, wird bei Messungen an der Folienblase lediglich das Randfeld des Meßkondensators ausgenutzt. In diesem Fall sind beide Kondensatorplatten des Meßkondensators außerhalb der Folienblase angeordnet und rechtwinklig zur Folienebene orientiert. An einer flach gelegten Folienbahn ist dagegen auch eine kapazitive Dickenmessung mit Hilfe eines Meßkondensators möglich, dessen Kondensatorplatten auf gegengesetzten Seiten der Folienbahn angeordnet sind. Alternativ kann in diesem Fall auch ein mechanisches Meßverfahren eingesetzt werden. In jedem Fall ist der Meßwert, der bei diesen Messungen erhalten wird, ein Maß für die Gesamtdicke der Folie.

Zu Verpackungszwecken werden jedoch häufig Mehrschichtfolien eingesetzt, die einen zwei- oder mehrlagigen Schichtaufbau aufweisen. Verpackungsfolien, die beispielsweise zum Frischhalten von Lebensmitteln eingesetzt werden, müssen nicht nur siegelfähig und wasserdampfundurchlässig, sondern auch luftundurchlässig, insbesondere undurchlässig für Sauerstoff sein. Dies läßt sich nur durch Mehrschichtfolien erreichen, da ein einzelnes Folienmaterial für sich allein nicht allen Anforderungen genügt. Beispielsweise sind Folien aus Polyethylen (PE) zwar siegelfähig und wasserdampfundurchlässig aber nicht sauerstoffdicht. Dies gilt sowohl für Polyethylen niedriger Dichte (LDPE), lineares Polyethylen niedriger Dichte (LLDPE) als auch für Polyethylen hoher Dichte (HDPE). Hingegen sind Folienmaterialien wie Polyamid (PA) und Ethylenvinylalkohol (EVOH) zwar sauerstoffundurchlässig (EVOH nur in trockenem Milieu), doch sind sie nicht siegelfähig. Ein häufig gebrauchter Schichtaufbau für Verpackungsfolien besteht deshalb aus einer mittleren Schicht aus EVOH, die durch beidseitig aufgebrachte siegelfähige Schichten aus LDPE gegen die Einwirkung von Wasserdampf geschützt ist (B. Schroeter, B. Kunze: "Neuentwicklungen bei Anlagen zur Herstellung coextrudierter Schauchfolien" in Kunststofftechnik Coextrusion von Folien, VDI Verlag. Düsseldorf. S. 167 - 170). Zwischen den verschiedenen Schichten ist jeweils noch ein Haftvermittler eingefügt, damit die Haftung der Schichten aneinander hergestellt wird.

Die mittlere Schicht aus relativ teurem EVOH sollte möglichst dünn sein, darf jedoch eine gewisse Mindestdicke nicht unterschreiten, damit die Undurchlässigkeit gegenüber Sauerstoff gewährleistet bleibt.

US-A 4 514 812 beschreibt ein Verfahren nach den Oberbegriffen der Ansprüche 1 und 2. zur Messung der Schichtdicken einer Mehrschichtfolie, die durch einen Trägerfilm und eine Schaumstoffschicht gebildet wird. Dabei wird mit Nährerungssensoren die Gesamtdicke gemessen, und mit einem weiteren Sensor wird das Flächengewicht der Folie bestimmt, so daß sich aus dem Dichteverhältnis der Schichten die einzelnen Schichtdicken bestimmen lassen. Die Dichte der Schaumstoffschicht wird in einer dritten Messung kapazitiv bestimmt.

Aufgabe der Erfindung ist es, ein einfaches Meßverfahren anzugeben, das es bei Folienmaterialien mit temperaturabhängiger Dielektrizitätskonstanten gestattet, nicht nur die Gesamtdicke, sondern auch die Dicke einzelner Schichten einer Mehrschichtfolie zu bestimmen.

Diese Aufgabe wird mit den in den unabhängigen Ansprüchen 1 und 2 angegebenen Merkmalen gelöst.

Die Erfindung macht sich den Umstand zunutze, daß viele Kunststoffmaterialien, die häufig als Sauerstoff-Sperrschicht in Mehrschichtfolien eingesetzt werden, eine deutliche Temperaturabhängigkeit der Dielektrizitätskonstanten aufweisen. Zährend andere Kunststoffmaterialien wie beispielsweise PE Innerhalb eines Temperaturbereiches von bis zu etwa 110° C eine nahezu konstante oder mit steigender Temperatur leicht abnehmende Dielektrizitätskonstante aufweisen, zeigen Materialien wie EVOH oder PA ab einer bestimmten kritischen Temperatur einen deutlichen Anstieg der Dielektrizitätskonstanten. Aus diesem Grund mußte bisher bei Mehrschichtfollen, die solche Materialien enthalten, die kapazitive Dickenmessung bei relativ niedriger Temperatur, also generell erst nach dem Flachlegen der Folie erfolgen, weil andernfalls die Temperaturabhängigkeit der Dielektrizitätskonstanten zu einer Verfälschung des Meßergebnisses führen würde. Führt man jedoch zwei kapazitive Dickenmessungen bei unterschiedlichen Temperaturen aus, so erhält man unterschiedliche Meßergebnisse, und dieser Unterschied ist ein Maß dafür, welchen Anteil die Schicht aus EVOH an der Gesamtdicke der Folie ausmacht. Da die Dielektrizitätskonstanten der beteiligten Materialien bei den beiden verschiedenen Meßtemperaturen bekannt sind, lassen sich die Dickenanteile der verschiedenen Materialien quantitativ bestimmen.

Wahlweise ist es anstelle zweier kapazitiver Messungen bei verschiedenen Temperaturen auch möglich, eine mechanische Messung der Gesamtdicke der Folie mit einer kapazitiven Messung bei einer Temperatur zu kombinieren, bei der die Dielektrizitätskonstanten der beiden Schichtmaterialien deutlich voneinander verschieden sind.

In einer bevorzugten Ausführungsform der Erfindung wird bei der Blasfolienherstellung eine erste kapazitive Messung bei relativ hoher Temperatur unmittelbar an der Folienblase durchgeführt, und eine zweite kapazitive oder mechanische Messung erfolgt nach dem Flachlegen der Folie, bei entsprechend niedrigerer Temperatur.

Im folgenden wird ein Ausführungsbeispiel der Erfindung anhand der Zeichnung näher erläutert.

Es zeigen:

Fig. 1    eine Prinzipskizze einer Blasfolienanlage, an der das Meßverfahren durchgeführt wird;

Fig. 2    den Schichtaufbau einer Mehrschichtfolie sowie das Prinzip der Dickenmessung mit Hilfe des Randfeldes eines Meßkondensators;

Fig. 3    das Prinzip einer Dickenmessung mit Hilfe eines Meßkondensators, dessen Feld die Folie durchdringt; und

Fig. 4    ein Diagramm der Temperaturabhängigkeit der Dielektrizitätskonstanten zweier Hauptbestandteile der Mehrschichtfolie nach Figuren 2 und 3.

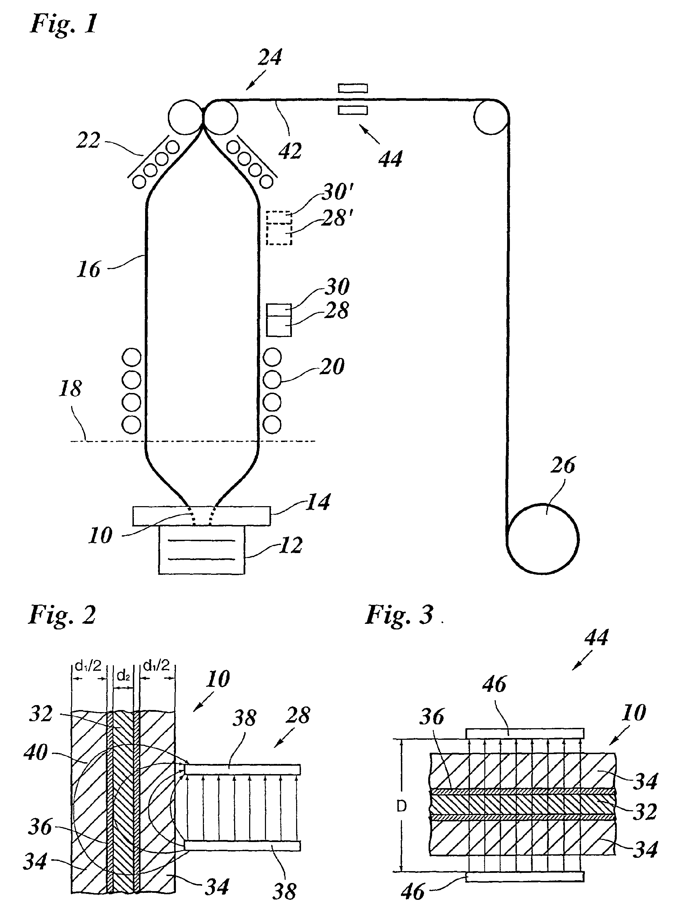

Gemäß Figur 1 wird eine Mehrschichtfolie 10 in Form eines Schlauches aus einem Coextrusionswerkzeug 12 extrudiert, mit Hilfe eines Kühlrings 14 gekühlt und zugleich durch Einblasen von Blasluft zu einer Folienblase 16 aufgeblasen. Durch das Aufblasen der Folienblase wird das Folienmaterial verstreckt, bis es schließlich in Höhe der sogenannten Frostgrenze 18 erstarrt. Wenn das Folienmaterial einen Kalibrierkorb 20 durchlaufen und sich genügend abgekühlt hat, wird es am oberen Ende der Folienblase 16 mit Hilfe einer bekannten Flachlegeeinrichtung 22 flach gelegt und mit Hilfe eines Abzugs 24 abgezogen und schließlich zu einem Coil 26 aufgewickelt.

Am Umfang der Folienblase 16 ist dicht oberhalb des Kalibrierkorbes 20 ein kapazitiver Meßkopf 28 angeordnet, dem ein Temperatursensor 30 zugeordnet ist und der auf dem Umfang der Folienblase 16 umläuft und dazu dient, die Dicke der Mehrschichtfolie 10 zu messen. Das Meßprinzip und der Schichtaufbau der Mehrschichtfolie 10 sind in Figur 2 dargestellt.

Im gezeigten Beispiel hat die Mehrschichtfolie 10 einen symmetrischen dreischichtigen Aufbau mit einer mittleren Schicht 32 aus Ethylenvinylalkohol (EVOH), die sandwichartig zwischen zwei gleich dicken Außenschichten 34 aus Polyethylen niedriger Dichte (LDPE) eingefügt ist. Zwischen den Schichten 32 und 34 befindet sich jeweils noch eine dünne Schicht eines Haftvermittlers 36, die jedoch bei den folgenden Erörterungen außer Acht gelassen werden kann.

Der Meßkopf 28 besteht im gezeigten Beispiel im wesentlichen aus einem Kondensator, dessen Kondensatorplatten 38 rechtwinklig zur Ebene der Mehrschichtfolie 10 orientiert sind und mit einem Rand unmittelbar an die Folienoberfläche angrenzen. Der Aufbau und die Funktionsweise des Meßkopfes 28 sind als solche bekannt und sollen deshalb nur kurz skizziert werden. Mit Hilfe eines nicht gezeigten Oszillators wird an die Kondensatorplatten 38 eine elektrische Wechselspannung angelegt. Während sich dadurch zwischen den Kondensatorplatten 38 ein homogenes elektrisches Feld ausbildet, entsteht an den Rändern der Kondensatorplatten ein inhomogenes Randfeld 40, das auch in die Mehrschichtfolie 10 eindringt und diese ganz durchdringt. Die Kapazität des Meßkondensators wird daher auch durch das dielektrische Material der Schichten 32, 34 der Mehrschichtfolien beeinflußt. Zusammen mit einer nicht gezeigten Induktivität bildet der Meßkondensator einen Schwingkreis, der durch die Gegenwart der Mehrschichtfolie 10 in charakteristischer Weise verstimmt wird.

Anhand der Eigenfrequenz dieses Schwingkreises läßt sich dann die Kapazität des Meßkondensators präzise bestimmen.

Die Kapazität C des Meßkondensators kann man sich additiv aus drei Anteilen zusammengesetzt denken:

$$C = C0 + C1 + C2.$$

Darin ist C0 die Kapazität des Meßkondensators in Abwesenheit der Mehrschichtfolie 10, C1 ist eine zusätzliche Kapazität, die durch die beiden Außenschichten 34 der Mehrschichtfolie 10 bedingt wird, und C2 ist eine zusätzliche Kapazität, die durch die mittlere Schicht 32 der Mehrschichtfolie bedingt wird.

Wenn d1 die Gesamtdicke der beiden Außenschichten 34 und $\varepsilon$1 die Dielektrizitätskonstante des Materials dieser Außenschichten ist, so läßt sich C1 schreiben als:

$$C1 = g1 \cdot \varepsilon1 \cdot d1.$$

Darin ist g1 ein Geometriefaktor, der von der Lage der Schichten 34 relativ zu den Kondensatorplatten 38 abhängig ist und die mehr oder minder starke Durchdringung dieser Schichten durch das Randfeld 40 berücksichtigt.

Entsprechend gilt für die mittlere Schicht 32 mit der Schichtdicke d2 und der Dielektrizitätskonstanten ε2:

$$C2 = g2 \cdot \varepsilon2 \cdot d2.$$

Die Geometriefaktoren g1 und g2 können berechnet oder experimentell bestimmt werden. Zwar sind diese Faktoren im Prinzip auch von den zu messenden Schichtdicken d1 und d2 abhängig, doch genügt es im Rahmen der geforderten Genauigkeit, wenn für die Schichtdicken d1 und d2 hier die jeweiligen Sollwerte zugrunde gelegt werden, die bei der Herstellung der Mehrschichtfolie eingehalten werden sollen.

Insgesamt erhält man so für die mit dem Meßkopf 28 gemessene Kapazität C des Meßkondensators:

$$C = C0 + g1 \cdot \varepsilon1 \cdot d1 + g2 \cdot \varepsilon2 \cdot d2.$$

Diese Gleichung enthält zwei Unbekannte, nämlich die beiden Schichtdicken d1 und d2 und ist deshalb ohne zusätzliche Informationen nicht eindeutig lösbar.

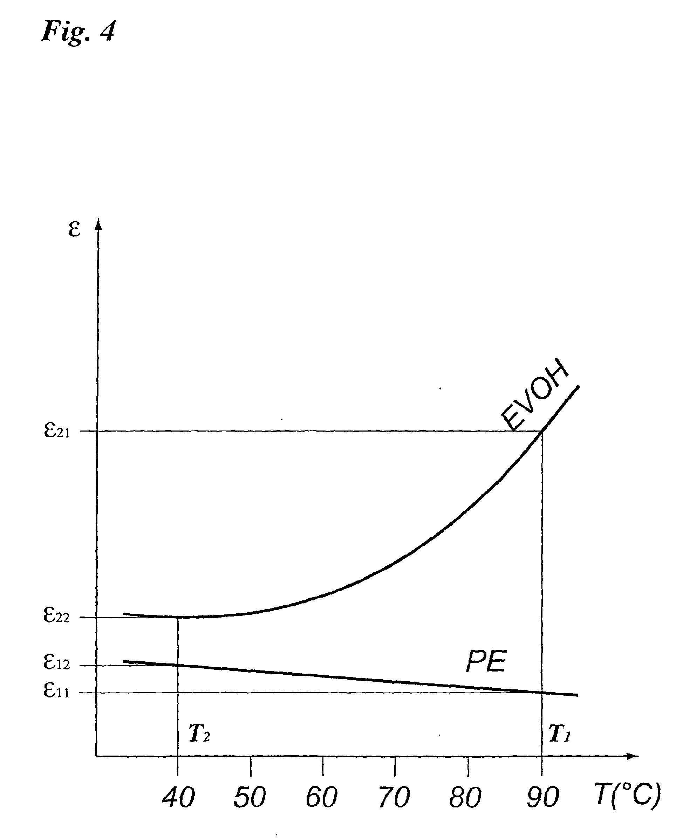

Figur 4 zeigt jedoch, daß bei dem hier betrachteten Schichtaufbau die Dielektrizitätskonstanten der beiden verwendeten Schichtmaterialien (PE und EVOH) eine deutlich unterschiedliche Temperaturabhängigkeit aufweisen. Insbesondere zeigt sich, daß die beiden Schichtmaterialien bei einer Folientemperatur T1 von beispielsweise 90° C, wie sie etwa am Ort des Meßkopfes 28 herrschen mag, stark unterschiedliche Dielektrizitätskonstanten ε11 und ε21 aufweisen, während die Dielektrizitätskonstanten ε12 und ε22 bei einer Folientemperatur T2 von 40° C näher beieinander liegen. Ordnet man nun einen zweiten kapazitiven Meßkopf 28' (ggf. mit Temperatursensor 30') im oberen Bereich der Folienblase 16 an, wo die Folientemperatur etwa 40° C beträgt, so erhält man zwei Meßergebnisse C(T1) und C(T2), die das folgende Gleichungssystem erfüllen:

$$C(T1) = C0 + g1 \cdot \varepsilon11 \cdot d1 + g2 \cdot \varepsilon21 \cdot d2 \qquad (1)$$

$$C(T2) = C0 + g2 \cdot \varepsilon12 \cdot d1 + g2 \cdot \varepsilon22 \cdot d2 \qquad (2)$$

Aus diesem Gleichungssystem lassen sich die beiden Unbekannten d1 und d2 eindeutig bestimmen, so daß man die Schichtdicke d2 der mittleren Schicht 24 sowie die Summe d1 der Schichtdicken der beiden Außenschichten 26 und damit letztlich auch die Gesamtdicke der Mehrschichtfolie 10 erhält (unter Vernachlässigung des Haftvermittlers).

Auf diese Weise ist es möglich, trotz erheblich unterschiedlicher Dielektrizitätskonstanten der beiden Schichtmaterialien eine präzise Dickenmessung am Umfang der Folienblase 16 vorzunehmen. Die so erhaltenen Meßergebnisse können einerseits dazu benutzt werden, die Einhaltung der Mindestdicke für die mittlere Schicht 32 zu überwachen, und andererseits dazu, mit Hilfe des Kühlrings 14 die Gesamtdicke der Mehrschichtfolie 10 zu regeln, wie beispielsweise in EP-C-0 478 641 beschrieben wird. Die Messung an der Folienblase 16 hat im letzteren Fall den Vorteil, daß die unvermeidlichen Regelverzögerungen relativ klein gehalten werden.

Bei dem in Figur 1 gezeigten Ausführungsbeispiel ist an der flachgelegten Folienbahn 42 noch ein weiterer kapazitiver Meßkopf 44 angeordnet, dessen Meßprinzip in Figur 3 veranschaulicht ist. Der Einfachheit halber wird in Figur 3 angenommen, daß die Folienbahn 42 einfach liegt. Das Prinzip läßt sich jedoch problemlos auf einen flach gelegten Folienschlauch verallgemeinern, bei dem zwei Lagen der Mehrschichtfolie flach aufeinander liegen.

Auch der Meßkopf 44 gemäß Figur 3 besteht im wesentlichen aus einem Meßkondensator. Die Kondensatorplatten 46 sind hier jedoch auf entgegengesetzten Seiten der Mehrschichtfolie 10 und parallel zu dieser angeordnet, so daß das gesamte elektrische Feld des Kondensators die Mehrschichtfolie durchdringt. Für die Kapazität des Meßkondensators ist hier neben den Beiträgen der Schichten 32 und 34 der Mehrschichtfolie auch der Beitrag CL der Luftschichten zu berücksichtigen, deren Gesamtdicke gleich der Differenz zwischen dem Plattenabstand D und der Gesamtdicke (d1 + d2) der Mehrschichtfolie ist. Die Kombinationswirkung dieser einzelnen Beiträge zur Gesamtkapazität entspricht hier einer Reihenschaltung der einzelnen Kapazitäten:

$$1/C = 1/CL + 1/C1 + 1/C2.$$

Bezeichnet man mit A die Fläche des Meßkondensators, mit $\varepsilon13$ und $\varepsilon23$ die Dielektrizitätskonstanten der Außenschichten 34 beziehungsweise der mittleren Schicht 32 bei der am Ort des Meßkopfes 44 herrschenden Temperatur T3 und mit $\varepsilon L$ die Dielektrizitätskonstante der Luft, so gilt:

$$1/C(T3) = (D - d1 - d2)/(A{\cdot}\varepsilon L) + d1/(A{\cdot}\varepsilon13) + d2/(A{\cdot}\varepsilon23) \qquad (3)$$

Auch die Gleichungen (1) und (3) bilden zusammen ein Gleichungssystem, das sich nach d 1 und d2 auflösen läßt.

Wahlweise ist es auch möglich, auf die Meßköpfe 28 und 28' ganz zu verzichten und stattdessen zwei Meßköpfe 44 mit der in Figur 3 gezeigten Anordnung zu verwenden, die die Folie bei zwei verschiedenen Temperaturen messen. Man erhält dann zwei Gleichungen vom Typ der Gleichung (3), aus denen sich wieder die Größen d1 und d2 bestimmen lassen.

Schließlich ist es auch möglich, anstelle des kapazitiven Meßkopfes 44 einen anderen Meßkopf zu verwenden, der - beispielsweise mechanisch - die Gesamtdikke d0 der Mehrschichtfolie erfaßt

$$d0 = d1 + d2. \qquad (4)$$

Auch die Gleichung (4) läßt sich mit jeder der Gleichungen (1) bis (3) zu einem Gleichungssystem kombinieren, durch das d1 und d2 eindeutig bestimmt sind.

Das Verfahren läßt sich auch problemlos auf Fälle verallgemeinern, bei denen die Mehrschichtfolie aus drei oder mehr Materialien mit unterschiedlicher Temperaturabhängigkeit der Dielektrizitätskonstanten besteht. Es werden dann in jedem Fall die Gesamtdicken der aus unterschiedlichen Materialien bestehenden "Einzelschichten" bestimmt, wobei nicht ausgeschlossen ist, daß diese "Einzelschichten" ihrerseits in mehrere Schichten aufgeteilt sind, wie beispielsweise die Schichten 34 in Figur 2. Die Anzahl der bei unterschiedlichen Temperaturen und/oder mit unterschiedlichen Meßanordnungen vorzunehmenden Messungen entspricht jeweils der Anzahl der zu bestimmenden Schichtdikken.

**Patentansprüche**

1. Verfahren zur kapazitiven Dickenmessung an Mehrschichtfollen (10), bei dem eine kapazitive Messung und Zusätzlich mindestens eine weitere Dickenmessung durchgeführt wird und durch Vergleich der Messergebnisse und anhand der unterschiedlichen Dielektrizitätskonstanten die Dicken (d1, d2) der Einzelschichten bestimmt werden, **dadurch gekennzeichnet. daß** das Verfahren an Mehrschichtfolien (10) durchgeführt wird, deren Schichten (32, 34) sichin ihren Dielektrizitätskonstanten bei einer ersten Temperatur (T1) stärker unterscheiden als bei einer zweiten Temperatur (T2), daß die kapazitive Messung bei der ersten Temperatur (T1) erfolgt und daß die weitere Dickenmessung eine kapazitive Messung bei der zweiten Temperatur (T2) ist.

2. Verfahren zur kapazitiven Dickenmessung an Mehrschichtfolien (10), bei dem eine kapazitive Messung und zusätzllch mindestens eine weitere, nicht-kapazitive Dickenmessung durchgeführt wird und durch Vergleich der Messergebnisse und anhand der unterschiedlichen Dielektrizitätskonstanten die Dicken (d1, d2) der Einzelschichten bestimmt werden, **dadurch gekennzeichnet, daß** das Verfahren an Mehrschichtfolien (10) durchgeführt wird, deren Schichten (32, 34) sich in ihren Dielektrizitätskonstanten bei einer ersten Temperatur (T1) stärker unterscheiden als bei einer zweiten Temperatur (T2), und daß die kapazitive Messung bei der ersten Temperatur (T1) an einer Folienblase (16) erfolgt.

3. Verfahren nach Anspruch 2, **dadurch gekennzeichnet, daß** die weitere Dickenmessung eine Messung der Gesamtdicke der Mehrschichtfolie (10) ist.

4. Verfahren nach einem der vorstehenden Ansprüche, **dadurch gekennzeichnet, daß** mindestens eine kapazitive Messung mit Hilfe eines Meßkopfes (28; 28') erfolgt, dessen Kondensatorplatten (38) auf derselben Seite der Mehrschichtfolie (10) und rechtwinklig zu dieser angeordnet sind.

5. Verfahren nach den Ansprüchen 1 und 4, **dadurch gekennzeichnet, daß** die kapazitive Messung an einer Folienblase (16) vorgenommen wird.

6. Verfahren nach einem der vorstehenden Ansprüche, **dadurch gekennzeichnet, daß** mindestens eine kapazitive Messung mit einem Meßkopf (44) erfolgt, dessen Kondensatorplatten (46) auf beiden Seiten der Mehrschichtfolie (10) und parallel zu dieser angeordnet sind.

7. Verfahren nach einem der vorstehenden Ansprüche, **dadurch gekennzeichnet, daß** die Mehrschichtfolie (10) mindestens eine Schicht (32) aus Ethylenvinylalkohol enthält.

8. Verfahren nach einem der vorstehenden Ansprüche, **dadurch gekennzeichnet, daß** die Mehrschichtfolie (10) mindestens eine Schicht aus Polyamid enthält.

9. Verfahren nach einem der vorstehenden Ansprüche, **dadurch gekennzeichnet, daß** die Mehrschichtfolie (10) mindestens eine Schicht (34) aus Polyethylen enthält.

10. Verfahren nach einem der vorstehenden Ansprüche, **dadurch gekennzeichnet, daß** am Ort der kapazitiven Dickenmessung auch die Temperatur der Folie gemessen wird.

**Claims**

1. Method for capacitively measuring thicknesses in multi-layer films (10), wherein a capacitive measurement and, in addition, at least one further thickness measurement are carried out and the thicknesses (d1, d2) of the individual layers are established by comparing the measurement results and with reference to the various dielectric constants, **characterised in that** the method is carried out with multi-layer films (10) whose layers (32, 34) differ in terms of their dielectric constants to a greater extent at a first temperature (T1) than at a second temperature (T2), **in that** the capacitive measurement is carried out at the first temperature (T1) and **in that** the further thickness measurement is a capacitive measurement at the second temperature (T2).

2. Method for capacitively measuring thicknesses in multi-layer films (10), wherein a capacitive measurement and, in addition, at least one further non-capacitive thickness measurement are carried out and the thicknesses (d1, d2) of the individual layers are established by comparing the measurement results and with reference to the various dielectric constants, **characterised in that** the method is carried out with multi-layer films (10) whose layers (32, 34) differ in terms of their dielectric constants to a greater extent at a first temperature (T1) than at a second temperature (T2) and **in that** the capacitive measurement is carried out at the first temperature (T1) on an extruded film (16).

3. Method according to claim 2, **characterised in that** the further thickness measurement is a measurement of the total thickness of the multi-layer film (10).

4. Method according to any one of the preceding claims, **characterised in that** at least one capacitive measurement is carried out by means of a measuring head (28; 28') whose capacitor plates (38) are arranged at the same side of the multi-layer film (10) and at right-angles relative thereto.

5. Method according to claims 1 and 4, **characterised in that** the capacitive measurement is carried out on an extruded film (16).

6. Method according to any one of the preceding claims, **characterised in that** at least one capacitive measurement is carried out with a measuring head (44) whose capacitor plates (46) are arranged at both sides of the multi-layer film (10) and parallel therewith.

7. Method according to any one of the preceding claims, **characterised in that** the multi-layer film (10) contains at least one layer (32) comprising ethylene vinyl alcohol.

8. Method according to any one of the preceding claims, **characterised in that** the multi-layer film (10) contains at least one layer comprising polyamide.

9. Method according to any one of the preceding claims, **characterised in that** the multi-layer film (10) contains at least one layer (34) comprising polyethylene.

10. Method according to any one of the preceding claims, **characterised in that** the temperature of the film is also measured at the location of the capacitive thickness measurement.

**Revendications**

1. Procédé pour la mesure capacitive de l'épaisseur de feuilles multicouches (10) dans lequel on exécute une mesure capacitive et en supplément au moins une autre mesure de l'épaisseur et on détermine, par comparaison des résultats des mesures et à l'aide des différentes constantes diélectriques, les épaisseurs (d1, d2) des différentes couches, **caractérisé en ce que** le procédé est mis en oeuvre sur des feuilles multicouches (10) dont les couches (32, 34) se différencient plus fortement par leurs constantes diélectriques à une première température (T1) qu'à une deuxième température (T2), **en ce que** la mesure capacitive s'effectue à la première température (T1) et **en ce que** l'autre mesure de l'épaisseur est une mesure capacitive à la deuxième température (T2).

2. Procédé pour la mesure capacitive de l'épaisseur de feuilles multicouches (10) dans lequel on exécute une mesure capacitive et en supplément au moins une autre mesure de l'épaisseur et on détermine, par comparaison des résultats des mesures et à l'aide des différentes constantes diélectriques, les épaisseurs (d1, d2) des différentes couches, **caractérisé en ce que** le procédé est mis en oeuvre sur des feuilles multicouches (10) dont les couches (32, 34) se différencient plus fortement par leurs constantes diélectriques à une première_température (T1) qu'à une deuxième température (T2) et **en ce que** la mesure capacitive s'effectue à la première température (T1) sur une feuille soufflée (16).

3. Procédé selon la revendication 2, **caractérisé en ce que** l'autre mesure de l'épaisseur est une mesure de l'épaisseur totale de la feuille multicouche (10).

4. Procédé selon l'une des revendications précédentes, **caractérisé en ce qu'**on effectue au moins une mesure capacitive à l'aide d'une tête de mesure (28 ; 28') dont les plaques de condensateur (38) sont disposées sur la même face de la feuille multicouche (10) et à angle droit par rapport à celle-ci.

5. Procédé selon les revendications 1 et 4, **caractérisé en ce que** la mesure capacitive est exécutée sur une feuille soufflée (16).

6. Procédé selon l'une des revendications précédentes, **caractérisé en ce qu'**on effectue au moins une mesure capacitive avec une tête de mesure (44) dont les plaques de condensateur (46) sont disposées sur les deux faces de la feuille multicouche (10) et parallèlement à celle-ci.

7. Procédé selon l'une des revendications précédentes, **caractérisé en ce que** la feuille multicouche (10) contient au moins une couche (32) d'alcool d'éthylène vinyle.

8. Procédé selon l'une des revendications précédentes, **caractérisé en ce que** la feuille multicouche (10) contient au moins une couche de polyamide.

9. Procédé selon l'une des revendications précédentes, **caractérisé en ce que** la feuille multicouche (10) contient au moins une couche (34) de polyéthylène.

10. Procédé selon l'une des revendications précédentes, **caractérisé en ce que** la température de la feuille est mesurée aussi à l'emplacement de la mesure capacitive de l'épaisseur.

Fig. 1

Fig. 2

Fig. 3

*Fig. 4*